# EUROPÄISCHE PATENTANMELDUNG

(11) **EP 2 902 557 A1**
(43) Veröffentlichungstag der Anmeldung: **05.08.2015**
(21) Anmeldenummer: 14153234.1
(22) Anmeldetag: 30.01.2014
(51) Int. Cl.: E04B 1/41, E04F 13/08, F16B 13/14, F16B 45/00

(54) **Ringanker**

(71) Anmelder: HILTI Aktiengesellschaft, 9494 Schaan (LI)
(72) Erfinder: Kuhnel, Erik, 9472 Grabs (CH); Rosenkranz, Falk, 9658 Wildhaus (CH)
(74) Vertreter: Hilti Aktiengesellschaft Corporate Intellectual Property

(57) **Zusammenfassung**

Die Erfindung betrifft einen Anker zum Verankern eines Anbauteils (50) an einer Wand (10). Erfindungsgemäss ist vorgesehen, dass der Anker einen Ankerring (2) aufweist, der in einer Ringnut (11) in der Wand verklebt ist.

## Beschreibung

Die Erfindung betrifft einen Anker zum Verankern eines Anbauteils an einer Wand gemäss dem Oberbegriff des Anspruchs 1.

Zum Verankern von Fassadenelementen an Gebäudewänden sind, beispielsweise aus der WO 12072577 A1, Montagewinkel bekannt, die mittels massiver Ankerbolzen an einer Gebäudewand verankert werden. Die Ankerbolzen können beispielsweise als Spreizanker, ausgeführt werden, die sich durch radiale Expansion im Bohrloch verankern. Ein Beispiel eines solchen Spreizankers ist in der EP 1892424 A2 beschrieben. Alternativ können die Ankerbolzen auch als chemische Anker ausgeführt werden, die mittels eines aushärtbaren Mörtels im Bohrloch fixiert werden. Ein Beispiel eines solchen chemischen Ankers ist in der WO 13041259 A1 beschrieben.

Die EP 0275879 A2 beschreibt ein hohles Ankerelement für Fassadenelemente. Dieses Ankerelement wird in ein Bohrloch eingeführt und mittels eines Klebers im Bohrloch verklebt, wobei der Kleber durch Löcher in der Mantelfläche des Ankerelements ins Bohrloch zugeführt wird.

Aufgabe der Erfindung ist es, einen Anker zum Verankern eines Anbauteils an einer Wand anzugeben, der bei besonders hoher Zuverlässigkeit und geringem Montageaufwand besonders gute mechanische und thermische Eigenschaften aufweist.

Die Aufgabe wird erfindungsgemäss durch einen Anker mit den Merkmalen des Anspruchs 1 gelöst. Bevorzugte Ausführungsformen sind in den abhängigen Ansprüchen angegeben.

Ein erfindungsgemässer Anker ist dadurch gekennzeichnet, dass er einen Ankerring aufweist, der in einer Ringnut in der Wand verklebt ist.

Ein Grundgedanke der Erfindung kann in einem Anker gesehen werden, der in einer Ringnut befestigt wird, anstatt, wie im Stand der Technik häufig üblich, in einer zylindrischen Bohrung. Für die Befestigung in der Ringnut weist der Anker einen Ankerring auf, der mit der Ringnut korrespondiert, und der somit in die Ringnut eingeführt werden kann und dort verklebt werden kann. Im Gegensatz zu zylindrischen Bohrungen können solche Ringnuten häufig mit relativ geringem Aufwand relativ durchmessergross ausgeführt werden, ohne dass die Struktur der Wand wesentlich beeinträchtigt wird. Somit kann erfindungsgemäss in besonders einfacher Weise eine relativ querschnittsgrosse Verbindung zwischen Anker und Wand realisiert werden. Infolgedessen kann erfindungsgemäss die Verankerungstiefe in der Wand bei identischen Lastwerten reduziert werden. Dies wiederum kann einerseits den Montagevorgang vereinfachen. Denn da die Verankerungstiefe relativ gering sein kann, ist die Wahrscheinlichkeit dafür, beim Bohren auf Bewehrungseisen zu treffen, reduziert. Darüber hinaus kann eine unerwünschte thermische Kopplung zwischen der Wand und der Umgebung vermieden werden, da der Anker, der potenziell eine Wärmebrücke bilden kann, nicht mehr besonders weit in das Innere der Wand reichen muss. Schliesslich kann ein erfindungsgemässer Ankerring auch in besonders einfacher Weise in die Unterkonstruktion einer Fassade integriert werden, so dass die Zahl der Komponenten und somit der Montageaufwand noch weiter reduziert werden können.

Bei dem Anbauteil kann es sich insbesondere um ein Fassadenelement handeln, vorzugsweise einer vorgehängten hinterlüfteten Fassade. Das Anbauteil kann also beispielsweise ein Teil einer Unterkonstruktion einer vorgehängten hinterlüfteten Fassade sein. Bei der Wand handelt es sich bevorzugt um eine Gebäudewand, insbesondere eine Aussenwand. Der Ankerring kann insbesondere mittels eines Mörtels in der Ringnut verklebt sein, beispielsweise eines Kunstharzmörtels bestehend aus Polyester- oder Epoxidharz.

Besonders vorteilhaft ist es, dass der Ankerring ein Kreisring und/oder die Ringnut eine Kreisnut ist. Eine Kreisnut, das heisst eine Ringnut in Kreisform, kann in besonders einfacher weise vor Ort mittels einer Bohrkrone erstellt werden.

Eine vorteilhafte Ausgestaltung der Erfindung liegt darin, dass der Anker ein Ankerrohr mit einem offenen ersten Ende und einem entgegengesetzten zweiten Ende aufweist, und dass der Ankerring durch das offene erste Ende des Ankerrohrs gebildet wird. Gemäss dieser Ausführungsform ist der Ankerring durch ein Rohrende gebildet, also an der Stirnseite eines Rohrs angeordnet. Hierdurch kann der Herstellungsaufwand weiter reduziert werden. Darüber hinaus kann die Verwendung eines Rohrs die thermischen Eigenschaften verbessern. Der Ankerring und/oder das Ankerrohr kann beispielsweise aus Aluminium, Stahl, insbesondere rostfreiem Stahl oder feuerverzinktem Stahl, oder faserverstärktem Kunststoff bestehen. Das zweite Ende des Rohrs kann offen oder geschlossen sein. Im Bereich des zweiten Endes können Befestigungselemente zum Befestigen von Fassadenelementen angeordnet sein.

Eine weitere bevorzugte Weiterbildung des erfindungsgemässen Ankers besteht darin, dass er ein erstes Befestigungselement aufweist, welches zumindest teilweise im Inneren des Ankerrohrs angeordnet ist, und dass er ein zweites Befestigungselement aufweist, welches teilweise im Inneren des Ankerrohrs angeordnet ist, welches am zweiten Ende des Ankerrohrs aus dem Ankerrohr vorsteht, und welches eine Halteeinrichtung zum Halten des Anbauteils aufweist, wobei das zweite Befestigungselement das erste Befestigungselement gegen die Innenwand des Ankerrohrs presst. Hierdurch kann das Anbauteil in besonders einfacher Weise und vorzugsweise auch positionsverstellbarer am Ankerrohr befestigt werden. Das erste Befestigungselement kann beispielsweise eine Dübelhülse und das zweite Befestigungselement eine Schraube oder ein Bolzen sein. Die Halteeinrichtung kann beispielsweise ein querschnittsverbreiterter Kopf oder ein Gewinde sein. Das zweite Befestigungselement kann auch mehrteilig ausgeführt sein, wobei ein erstes Teil beispielsweise eine Gewindehülse sein kann, die vollständig im Inneren des Ankerrohrs angeordnet sein kann.

Die Erfindung betrifft auch einen Baukörper bestehend aus einem erfindungsgemässen Anker und einer Wand, wobei der Ankerring des Ankers in einer Ringnut in der Wand verklebt ist, das heisst die Erfindung umfasst auch die Kombination des Ankers mit der Wand.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

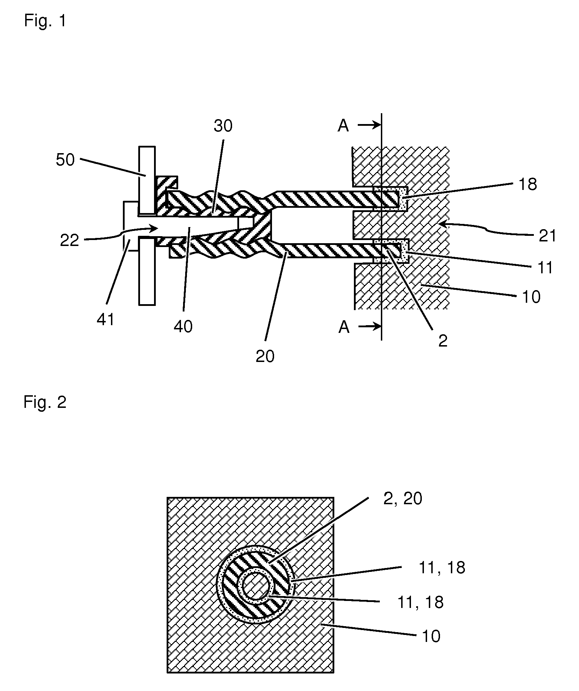

- Figur 1:: eine längsgeschnittene Ansicht eines erfindungsgemässen Ankers, eingeklebt in einer Wand; und
- Figur 2:: eine Querschnittsansicht A-A aus Figur 1.

Die Figuren zeigen ein Ausführungsbeispiel eines erfindungsgemässen Ankers. Der Anker weist ein Ankerrohr 20 auf, welches an seinem ersten Ende 21 offen ist. Am offenen ersten-Ende 21 des Ankerrohrs 20 ist durch das Rohrende ein endseitiger, kreisringförmiger Ankerring 2 gebildet. Dieser Ankerring 2 ist in einer kreisringförmigen Ringnut 11 in einer Wand 10 aufgenommen und dort mittels einer in der Ringnut 11 befindlichen ausgehärteten Mörtelmasse 18 fixiert.

Am entgegengesetzten zweiten Ende des Ankerrohrs 20 ist ein Anbauteil 50 am Ankerrohr 20 befestigt. Die Befestigung erfolgt mittels eines als Dübelhülse ausgebildeten ersten Befestigungselements 30 und eines als Spreizbolzen ausgebildeten zweiten Befestigungselements 40. Das als Dübelhülse ausgebildete erste Befestigungselement 30 ist in das Innere des Ankerrohrs eingeschoben und wird vom als Spreizbolzen ausgebildeten zweiten Befestigungselement 40 gegen die Rohrinnenwand des Ankerrohrs 20 gepresst. Das zweite Befestigungselement 40 steht am zweiten Ende 22 des Ankerrohrs 20 aus dem Ankerrohr 20 vor und weist eine als Kopf ausgebildete Halteeinrichtung 41 auf, die das Anbauteil 50 hält.

Zum Setzen des gezeigten Ankers kann in einem ersten Schritt mittels einer Diamantbohrkrone die Ringnut 11 in der Wand 10 erzeugt werden. Die Ringnut 11 kann beispielsweise einen Durchmesser von etwa 30 mm aufweisen. Die Ringnut 11 wird häufig weniger tief als eine vergleichbare zylindrische Bohrung sein, und kann beispielsweise etwa 35 mm tief sein. Die Gefahr von Bewehrungseisentreffern kann hierdurch reduziert werden.

In einem zweiten Schritt können die Mörtelmasse 18 und das erste Ende 21 des Ankerrohrs 20 mit dem Ankerring 2 in die Ringnut 11 eingeführt werden. Beim Aushärten der Mörtelmasse 18 werden der Ankerring 2 und somit das Ankerrohr 20 in der Ringnut 11 fixiert.

Während der Aushärtezeit der Mörtelmasse 18, also wenn die Mörtelmasse 18 noch weich ist, kann das Ankerrohr 20 mit dem Ankerring 2 durch eine geeignete Formgebung des Ankerrohrs oder durch Zusatzelemente (zum Beispiel Flansche) temporär fixiert werden.

Eine besonders gute Wärmeisolierung kann durch die Mörtelmasse 18, eines aus Kunststoff ausgeführten Ankerrohrs 20 und/oder durch einen Kunststoffabstandshalter in der Ringnut 11 gewährleistet werden. Die dargestellte Ausführungsform ermöglicht eine frontseitige Ankermontage, ohne dass der Dämmstoff, der häufig in der Umgebung der Anker angeordnet ist, beeinträchtigt wird.

## Patentansprüche

1. Anker zum Verankern eines Anbauteils (50) an einer Wand (10),
**dadurch gekennzeichnet,**
**dass** er einen Ankerring (2) aufweist, der in einer Ringnut (11) in der Wand (10) verklebt ist.

2. Anker nach Anspruch 1,
**dadurch gekennzeichnet,**
**dass** der Ankerring (2) ein Kreisring und die Ringnut (11) eine Kreisnut ist.

3. Anker nach einem der vorstehenden Ansprüche,
**dadurch gekennzeichnet,**
**dass** er ein Ankerrohr (20) mit einem offenen ersten Ende (21) und einem entgegengesetzten zweiten Ende (22) aufweist, und
**dass** der Ankerring (2) durch das offene erste Ende (21) des Ankerrohrs (20) gebildet wird.

4. Anker nach Anspruch 3,
**dadurch gekennzeichnet,**
**dass** er ein erstes Befestigungselement (30) aufweist, welches zumindest teilweise im Inneren des Ankerrohrs (20) angeordnet ist, und
**dass** er ein zweites Befestigungselement (40) aufweist, welches teilweise im Inneren des Ankerrohrs (20) angeordnet ist, welches am zweiten Ende (22) des Ankerrohrs (20) aus dem Ankerrohr (20) vorsteht, und welches eine Halteeinrichtung (41) zum Halten des Anbauteils (50) aufweist,
wobei das zweite Befestigungselement (40) das erste Befestigungselement (30) gegen die Innenwand des Ankerrohrs (20) presst.

5. Baukörper, bestehend aus einem Anker nach einem der vorstehenden Ansprüche und einer Wand, wobei der Ankerring (2) des Ankers in einer Ringnut (11) in der Wand verklebt ist.
